# FASCICULE DE BREVET EUROPEEN

(11) **EP 0 923 176 B1**
(45) Date de publication et mention de la délivrance du brevet: **22.09.2004**
(21) Numéro de dépôt: 98403082.5
(22) Date de dépôt: 08.12.1998
(51) Int. Cl.: H02G 3/12

(54) **Accessoire de fixation à griffe, notamment pour boîte d'encastrement et boîte d'encastrement correspondante**
Greifhalter für Einbaudose und entsprechende Einbaudose
Jaw fastening accessory for flush mounted box and associated flush mounted box

(30) Priorité: 10.12.1997 FR 9715630
(43) Date de publication de la demande: 16.06.1999
(73) Titulaire: LEGRAND, 87000 Limoges (FR); LEGRAND SNC, 87000 Limoges (FR)
(72) Inventeur: Moreau, Bernard, 87700 Aixe sur Vienne (FR)
(74) Mandataire: Santarelli

(56) Documents cités:
- EP-A- 0 706 250

## Description

La présente invention concerne d'une manière générale les boîtes d'encastrement du type de celles mises en oeuvre pour le logement d'un quelconque appareil, et, notamment, d'un quelconque appareillage électrique, dans une cloison sèche.

Par cloison sèche, on entend, ici, de manière usuelle, une quelconque cloison creuse présentant en façade un panneau de parement, tel que par exemple une plaque de plâtre revêtue d'une couche de carton sur chacune de ses faces.

La présente invention vise plus particulièrement les accessoires de fixation dont il est usuel d'équiper une telle boîte d'encastrement pour son assujettissement à un tel panneau de parement.

Il s'agit, en pratique, d'accessoires de fixation à griffe, c'est-à-dire d'accessoires de fixation comportant chacun une griffe, qui est en prise en vissage avec une vis de commande, et qui, sous le contrôle de celle-ci, est susceptible de passer d'une position rétractée à une position déployée.

En position rétractée, la griffe est tout entière contenue dans le contour extérieur hors tout de la boîte d'encastrement, en sorte qu'elle ne s'oppose pas à l'engagement de celle-ci dans le logement découpé pour elle dans le panneau de parement de la cloison sèche à équiper.

En revanche, en position déployée, la griffe fait au contraire saillie latéralement vers l'extérieur par rapport au contour extérieur hors tout de la boîte d'encastrement, en sorte que, en coopération avec une garde d'appui solidaire de celle-ci, elle est apte à venir pincer le panneau de parement.

Dans les réalisations de ce type connues à ce jour, un tel accessoire de fixation à griffe se réduit le plus souvent à la griffe et à sa vis de commande, et la griffe est constituée par une pièce métallique, qui, en prise avec la vis de commande, s'étend dès l'origine sensiblement perpendiculairement à celle-ci.

Outre qu'une telle réalisation met en oeuvre, de manière dispendieuse, deux pièces métalliques, à savoir la vis de commande et la griffe, ce qui entraîne des coûts de production et d'assemblage non négligeables, elle nécessite de prévoir sur la boîte d'encastrement des dispositions particulières pour que, comme indiqué ci-dessus, la griffe puisse être initialement escamotée en position rétractée dans le contour extérieur hors tout d'une telle boîte d'encastrement.

Plus précisément, elle nécessite de prévoir, sur cette boîte d'encastrement, d'une part, une niche, dans laquelle est reçue la griffe lorsqu'elle est ainsi en position rétractée, et, d'autre part, au moins une rampe, propre à permettre ensuite le passage de cette griffe de sa position rétractée à sa position déployée.

Cela est le cas, notamment, dans le brevet français qui, déposé le 14 décembre 1990 sous le No 90 15891, a été publié sous le No 2 670 625.

Tant la niche que la rampe correspondante empiètent inévitablement sur le volume inteme de la boîte d'encastrement, au détriment de la capacité de celle-ci.

La présente invention a d'une manière générale pour objet une disposition permettant d'éviter cet inconvénient et conduisant en outre à d'autres avantages.

De manière plus précise, elle a tout d'abord pour objet un accessoire de fixation pour équiper une boîte d'encastrement, lequel accessoire comporte une vis de commande et une griffe, qui est en prise à vissage avec la vis de commande, et qui, sous le contrôle de celle-ci, est susceptible de passer d'une position rétractée à une position déployée, cet accessoire de fixation à griffe étant d'une manière générale caractérisé en ce qu'il comporte en propre, en outre de la griffe et de la vis de commande, un corps, que la vis de commande traverse en deçà de la griffe, et auquel cette griffe est articulée par une charnière à distance de la vis de commande.

Ainsi, et suivant une caractéristique de l'invention, la griffe peut avantageusement s'étendre dans le prolongement même du corps lorsqu'elle est en position rétractée.

Il n'est donc pas besoin de prévoir pour elle sur la boîte d'encastrement une quelconque niche pour la recevoir dans cette position rétractée, ni une quelconque rampe pour son passage de cette position rétractée à sa position déployée, au bénéfice d'une simplification de réalisation de cette boîte d'encastrement.

En outre, la griffe peut avantageusement être d'un seul tenant avec le corps auquel elle est articulée, en venant de moulage d'une seule et même pièce avec celui-ci, au bénéfice d'une simplification avantageuse de réalisation et d'assemblage pour l'ensemble.

Il suffit, dans un tel cas, que la chamière correspondante, qui, par ailleurs, est d'une manière plus générale préférentiellement "évanescente", dans le sens où elle n'intervient qu'au cours d'une première phase de la mise en oeuvre de l'ensemble pour disparaître ensuite à l'issue de celle-ci, soit tout simplement sécable.

Préférentiellement, également, le corps prévu suivant l'invention présente, à son extrémité supérieure, une garde d'appui, qui s'étend transversalement par rapport à la vis de commande, du côté de celle-ci où intervient la griffe lorsque cette griffe est en position déployée.

Ainsi, cette garde d'appui suffit pour assurer par elle-même le pincement du panneau de parement de la cloison sèche à équiper, sans qu'il soit nécessaire de prévoir sur la boîte d'encastrement une quelconque autre garde d'appui, au bénéfice, encore, d'une avantageuse simplification de réalisation pour cette boîte d'encastrement.

La présente invention a encore pour objet une telle boîte d'encastrement.

Les objets de l'invention, ainsi que leurs caractéristiques et leurs avantages ressortiront d'ailleurs de la description qui va suivre, à titre d'exemple, en référence aux dessins schématiques annexés sur lesquels :
la figure 1 est une vue en perspective, en partie éclatée, d'une boîte d'encastrement équipée d'accessoires de fixation à griffe suivant l'invention ;
la figure 2 reprend, à échelle supérieure, le détail de cette boîte d'encastrement repéré par un encart Il sur cette figure 1 ;
la figure 3 en est, à échelle encore supérieure, une vue partielle en coupe, suivant la ligne III-III de la figure 2 ;
la figure 4 reprend, à échelle encore supérieure, le détail de la figure 3 repéré par un encart IV sur cette figure 3 ;
la figure 5 est une vue en perspective d'un accessoire de fixation à griffe suivant l'invention, représenté isolément, vu de l'avant ;
la figure 6 en est une autre vue en perspective, vu de l'arrière, suivant la flèche VI de la figure 5 ;
la figure 7 en est une vue partielle en coupe axiale, suivant la ligne VII-VII de la figure 6 ;
la figure 8 en est, à échelle inférieure, une vue en coupe axiale complète, suivant la ligne VIII-VIII de la figure 5 ;
les figures 9A, 9B, 9C et 9D sont des vues en coupe axiale, qui, analogues à celle de la figure 8, illustrent chacune respectivement diverses phases successives de mise en oeuvre de l'accessoire de fixation à griffe suivant l'invention.

Tel qu'illustré sur ces figures, il s'agit, globalement, d'assujettir une quelconque boîte d'encastrement 10 au panneau de parement 11 d'une quelconque cloison sèche 12.

La cloison sèche 12 n'a pas été représentée en entier sur les figures.

Seul en a été partiellement schématisé, en traits interrompus, sur les figures 9A à 9D, le panneau de parement 11.

De manière connue en soi, une découpe 13 est ménagée dans ce panneau de parement 11 au contour de la boîte d'encastrement 10, pour l'engagement de celle-ci dans la cloison sèche 12.

De manière également connue en soi, la boîte d'encastrement 10 est équipée localement d'au moins un accessoire de fixation à griffe 14 pour son assujettissement au panneau de parement 11 par simple pincement de celui-ci.

De manière connue en soi, enfin, la boîte d'encastrement 10 comporte, en creux, sur sa surface extérieure, au moins un logement 15, qui est globalement tubulaire, et qui, ouvert vers l'extérieur, est apte à recevoir, suivant des dispositions décrites plus en détail ultérieurement, un tel accessoire de fixation à griffe 14.

Dans la forme de réalisation représentée, la boîte d'encastrement 10 présente plusieurs zones d'angle 17, avec un logement 15 dans chacune de celles-ci.

Plus précisément, dans cette forme de réalisation, la boîte d'encastrement 10 a, en plan, un contour globalement rectangulaire, et elle comporte donc quatre zones d'angle 17, avec, dans chacune de celles-ci, un logement 15.

Préférentiellement, et cela est le cas dans la forme de réalisation représentée, ces zones d'angle 17 sont chacune globalement arrondies en quart de cercle, et le logement 15 qu'elles présentent s'étend sur toute leur hauteur.

Préférentiellement, également, il est prévu un accessoire de fixation à griffe 14 dans le logement 15 de chacune de ces zones d'angles 17.

En pratique, les logements 15 interviennent sur la paroi latérale 18 de la boîte d'encastrement 10, et, outre cette paroi latérale 18, qui, dans la forme de réalisation représentée, est légèrement évasée en gradins, cette boîte d'encastrement 10 comporte une paroi de fond 19.

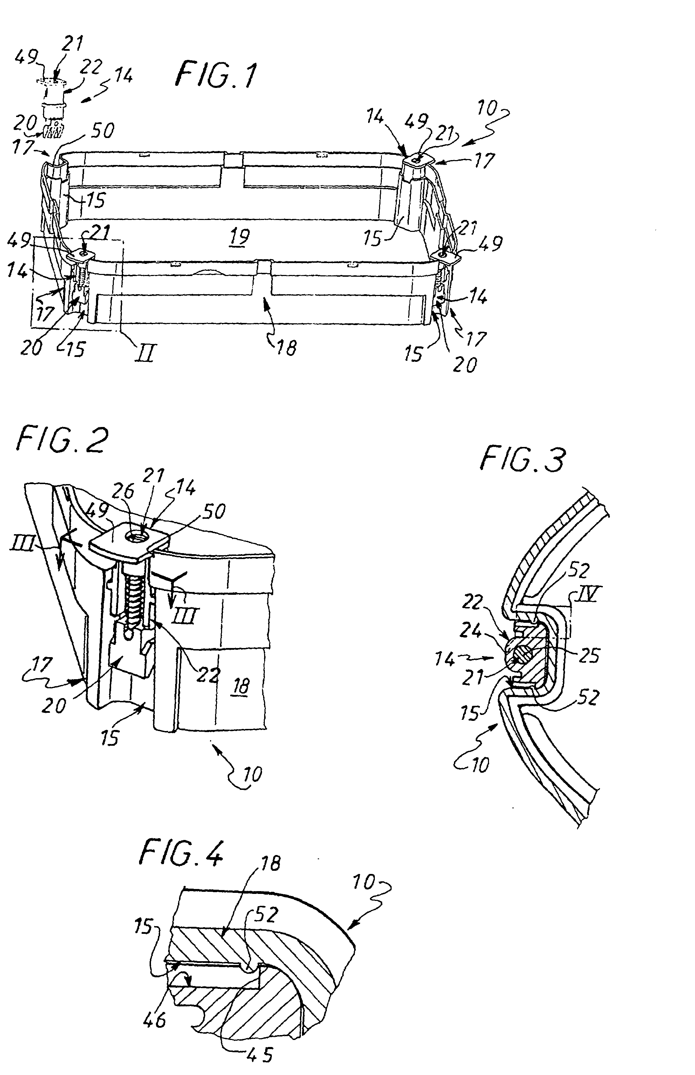

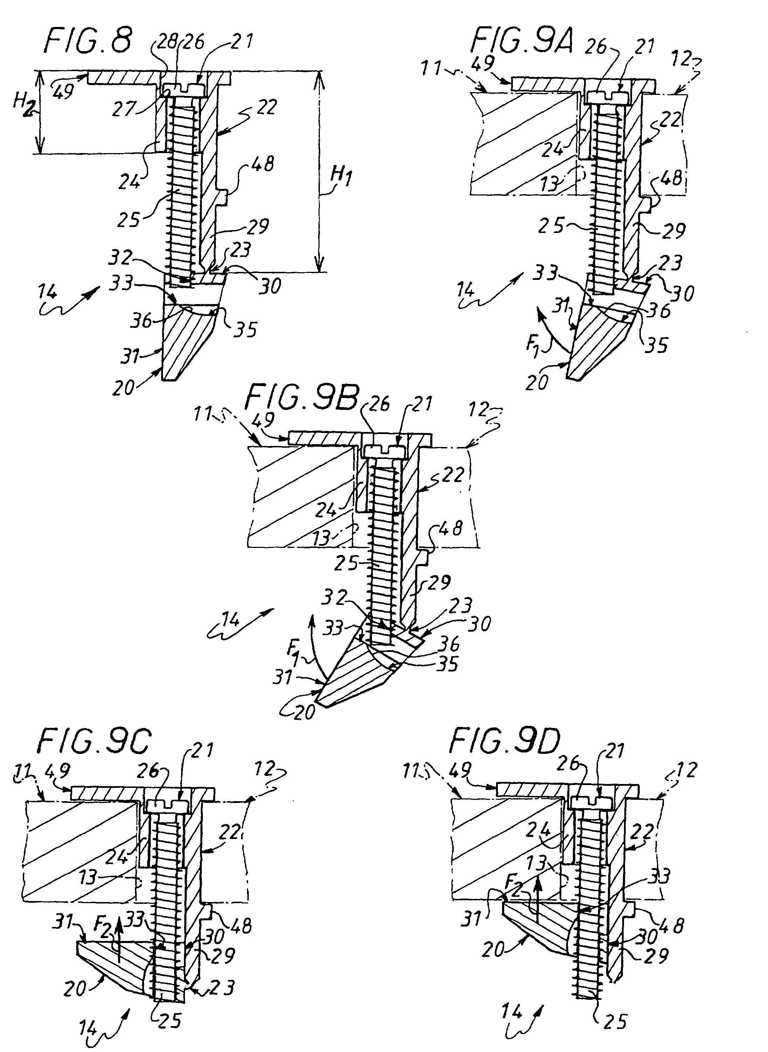

En pratique, également, les divers accessoires de fixation à griffe 14 mis en oeuvre sont tous identiques entre eux, et ils comportent chacun une griffe 20, qui est en prise à vissage avec une vis de commande 21 accessible en façade à l'usager, et qui, sous le contrôle de cette vis de commande 21, est susceptible de passer d'une position rétractée, représentée sur les figures 1 à 8, à une position déployée, représentée sur la figure 9C.

Suivant l'invention, chacun des accessoires de fixation à griffe 14 comporte, en outre, un corps 22, que la vis de commande 21 traverse en deçà de la griffe 20, et auquel cette griffe 20 est articulée par une charnière 23 à distance de la vis de commande 21.

Dans la forme de réalisation représentée, ce corps 22 comporte, notamment, d'une part, une douille 24, que la vis de commande 21 traverse librement par son fût 25, cependant que sa tête 26 est en appui sur un épaulement 27 prévu transversalement à l'intérieur de cette douille 24 au voisinage du débouché 28 de celle-ci, et, d'autre part, un flasque 29, qui longe la douille 24, en s'étendant au-delà de celle-ci, et en bout duquel intervient la charnière 23, figure 8.

La hauteur H1 du flasque 29 est largement supérieure à celle H2 de la douille 24, et le perçage interne de cette douille 24 a un diamètre sensiblement égal à celui du fût 25 de la vis de commande 21.

Dans la forme de réalisation représentée, le flasque 29 fait corps avec la douille 24.

La charnière 23, quant à elle, s'étend transversalement par rapport à la vis de commande 21, à distance du fût 25 de celle-ci.

Préférentiellement, et pour des raisons qui apparaîtront ci-après, cette charnière 23 est évanescente.

Dans la forme de réalisation représentée, la griffe 20 est d'un seul tenant avec le corps 22, et, pour son évanescence, la charnière 23 qui la relie à celui-ci est sécable.

Par exemple, et tel que représenté, cette charnière 23 peut être formée par une zone de moindre épaisseur intervenant entre la griffe 20 et le corps 22.

En pratique, la griffe 20 vient de moulage avec le corps 22, en formant initialement ainsi une seule et même pièce avec celui-ci.

L'ensemble est préférentiellement en matière synthétique.

Extérieurement, la griffe 20 forme une pièce relativement massive, et elle présente, sensiblement à angle droit l'une par rapport à l'autre, deux facettes 30, 31, à savoir, une facette de basculement et de translation 30, sur laquelle intervient, transversalement, la charnière 23, et une facette de pincement 31, par laquelle elle est adaptée à venir en butée contre la surface intérieure du panneau de parement 11 de la cloison sèche 12 à équiper.

Dans la forme de réalisation représentée, la charnière 23 intervient à distance de l'une et l'autre des arêtes d'extrémité de la facette de basculement et de translation 30.

Du côté opposé à l'angle droit qu'elles forment entre elles, les facettes de basculement et de translation 30 et de pincement 31 sont reliées sensiblement en triangle ou en trapèze l'une à l'autre.

Intérieurement, la griffe 20 comporte, pour coopération avec la vis de commande 21, et, plus précisément, avec le fût 25 de celle-ci, deux perçages 32, 33, qui se recoupent l'un l'autre sensiblement à angle droit, à savoir, un perçage de basculement 32, avec lequel la vis de commande 21 est en prise lorsque la griffe 20 est en position rétractée, et un perçage de translation 33, avec lequel la vis de commande 21 est en prise lorsque la griffe 20 est en position déployée.

L'un et l'autre de ces deux perçages de basculement 32 et de translation 33 ont un diamètre légèrement inférieur à celui du fût 25 de la vis de commande 21.

Le perçage de basculement 32 débouche sur la facette de basculement et de translation 30, et, pour des raisons qui apparaîtront ci-après, il est ouvert latéralement du côté opposé à la charnière 23.

Le perçage de translation 33, qui est parallèle à la facette de basculement et de translation 30, débouche, lui, sur la facette de pincement 31.

En pratique, et tel que représenté, ce perçage de translation 33 est ouvert à l'une et l'autre de ses extrémités.

Préférentiellement, et cela est le cas dans la forme de réalisation représentée, il comporte, par ailleurs, intérieurement, du côté opposé à la charnière 23, un dégagement 35, qui s'étend au moins en partie en regard du perçage de basculement 32.

Préférentiellement, également, et cela est également le cas dans la forme de réalisation représentée, le fond 36 de ce dégagement 35 a un profil circulaire centré sur la charnière 23.

Dans la forme de réalisation représentée, la griffe 20 est allégée par des rainures 38 qui interviennent à son dos.

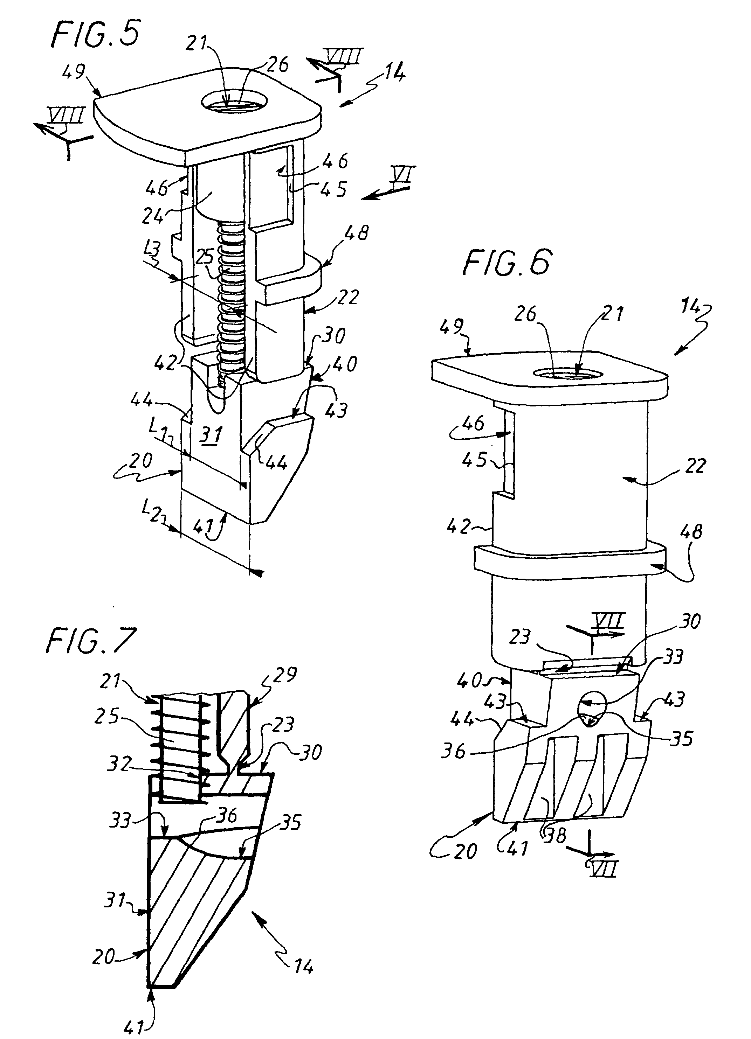

Bien entendu, ces rainures 38, qui sont visibles sur la figure 6, s'arrêtent à distance du perçage de translation 33.

La partie de la griffe 20 qui comporte sa facette de basculement et de translation 30 et ses perçages de basculement 32 et de translation 33 forme pour cette griffe 20 un talon 40 de largeur L1 inférieure à la largeur L2 de son extrémité libre 41, figure 5.

Dans la forme de réalisation représentée, le corps 22 comporte, latéralement, deux joues 42, qui, courant parallèlement l'une à l'autre sur toute la hauteur H1 du flasque 29, en formant en pratique pour celui-ci des retours en équerre, s'étendent chacune respectivement de part et d'autre de la douille 24, et entre lesquelles la griffe 20 est engagée par son talon 40 lorsqu'elle est en position déployée.

La distance L3 séparant l'une de l'autre intérieurement ces joues 42 est donc sensiblement égale à la largeur L1 du talon 40 de la griffe 20, tout en étant légèrement supérieure à cette largeur L1.

Corollairement, la griffe 20 comporte, latéralement, deux épaulements 43, pour son appui contre la tranche des deux joues 42 du corps 22 lorsqu'elle est en position déployée.

Sur la plus grande partie de leur longueur, ces épaulements 43 s'étendent parallèlement à la facette de basculement et de translation 30.

Ils sont toutefois abattus par un chanfrein 44 du côté de la facette de pincement 31.

Dans la forme de réalisation représentée, les faces latérales de la griffe 20 sont parallèles entre elles, tant en deçà de leur épaulement 43, où, formant les faces latérales du talon 40, elles sont alors écartées l'une de l'autre de la largeur L1, qu'au-delà de cet épaulement 43, où elles sont alors écartées l'une de l'autre de la largeur L2.

Dans la forme de réalisation représentée, le corps 22 présente, latéralement, deux crans 45, qui s'étendent chacun parallèlement à la vis de commande 21.

Par exemple, et tel que représenté, ces crans 45 sont chacun respectivement formés à la faveur de dégagements 46 intervenant en creux à la surface extérieure des joues 42.

Dans la forme de réalisation représentée, le corps 22 présente, par ailleurs, en saillie sur sa surface extérieure, sur une partie au moins du contour de celle-ci, une nervure 48, qui, disposée à distance de l'une et de l'autre de ses extrémités, s'étend transversalement par rapport à la vis de commande 21.

Par exemple, et tel que représenté, cette nervure 48 s'étend en continu au dos du flasque 29 et des joues 42, de la tranche d'une de ces joues 42 à la tranche de l'autre de celles-ci, et elle a en section transversale un profil quadrangulaire.

Enfin, dans la forme de réalisation représentée, le corps 22 présente, à son extrémité supérieure, une garde d'appui 49, qui s'étend transversalement par rapport à la vis de commande 21, du côté de celle-ci où intervient la griffe 20 lorsque cette griffe 20 est en position déployée.

Par exemple, et tel que représenté, cette garde d'appui 49 déborde, latéralement, tant du flasque 29 que des joues 42, suivant une saillie sensiblement comparable à celle de la nervure 48, et elle a, en plan, un contour globalement rectangulaire.

Corollairement, la boîte d'encastrement 10 présente, le long du bord libre de sa paroi latérale 18, au droit de chacun des logements 15 que forme celle-ci, un décrochement 50 propre à l'encastrement d'une telle garde d'appui 49.

Elle comporte, également, en saillie sur la paroi intérieure de chacun de ces logements 15, parallèlement à leurs génératrices, deux bourrelets 52, qui s'étendent chacun respectivement en vis-à-vis sur les deux faces latérales d'un tel logement 15.

Mais, ainsi qu'on le notera, la boîte d'encastrement 10 est, par elle-même, dépourvue de toute garde d'appui.

Autrement dit, elle ne comporte pas de rebord en saillie vers l'extérieur le long du bord libre de sa paroi latérale 18.

En service, un accessoire de fixation à griffe 14 est en place dans certains au moins des logements 15 de la boîte d'encastrement 10, et, préférentiellement, dans chacun de ceux-ci.

Cette mise en place se fait avantageusement par simple encliquetage, les crans 45 du corps 22 d'un tel accessoire de fixation à griffe 14 venant se prendre derrière les bourrelets 52 du logement 15 correspondant, par simple déformation élastique temporaire des parois latérales de celui-ci.

Corollairement, les accessoires de fixation à griffe 14 ainsi mis en place sur la boîte d'encastrement 10 se trouvent chacun calés sur la paroi latérale 18 de celle-ci, tant en hauteur, par leur garde d'appui 49, que, transversalement, par leur nervure 48, celle-ci trouvant sa place à la faveur d'un des gradins que comporte cette paroi latérale 18.

Bien entendu, ils sont tous initialement dans une configuration pour laquelle leur griffe 20 est en position rétractée.

Suivant l'invention, lorsque cette griffe 20 est ainsi en position rétractée, elle s'étend dans le prolongement du corps 22 correspondant, tel que représenté sur la figure 8.

Corollairement, la tête 26 de la vis de commande 21 associée est en appui contre l'épaulement 27 de ce corps 22, et, par l'extrémité de son fût 25, cette vis de commande 21 est en prise à vissage avec le perçage de basculement 32 de la griffe 20, ce qui la rend imperdable.

Pour la configuration qui est ainsi la leur, les accessoires de fixation à griffe 14 équipant la boîte d'encastrement 10 ne constituent en rien une gêne à l'engagement de cette boîte d'encastrement 10 dans la découpe 13 du panneau de parement 11 de la cloison sèche 12 à équiper.

Tel que schématisé en traits interrompus sur les figures 9A à 9D, cet engagement se fait jusqu'à ce que, par leur garde d'appui 49, ces accessoires de fixation à griffe 14 viennent chacun porter sur la surface extérieure du panneau de parement 11.

Il est ensuite procédé au vissage de leur vis de commande 21.

Tel que schématisé par une flèche F1 sur les figures 9A et 9B, ce vissage provoque tout d'abord un basculement de la griffe 20 autour de la charnière 23, du fait du déport de celle-ci par rapport à la vis de commande 21.

Au cours de ce basculement, le fût 25 de la vis de commande 21 s'engage plus avant dans le perçage de basculement 32 de la griffe 20, puis, à la faveur de l'extrémité ouverte de ce perçage de basculement 32 aussi bien qu'à la faveur du dégagement 35 prévu à cet effet, il s'engage également progressivement dans son perçage de translation 33.

Au terme du basculement de la griffe 20, et ainsi qu'il est représenté sur la figure 9C, cette griffe 20 est appliquée par sa facette de basculement et de translation 30 contre le flasque 29, sa facette de pincement 31 s'étend sensiblement parallèlement à la garde d'appui 49, et elle n'est en prise avec la vis de commande 21, et, plus précisément, avec le fût 25 de celle-ci, que par son seul perçage de translation 33.

Conjointement, la griffe 20 est engagée, par son talon 40, entre les joues 42 du corps 22.

Si, donc, le vissage de la vis de commande 21 est poursuivi, elle se trouve bloquée en rotation par rapport au corps 22, et elle ne peut dès lors que cheminer le long du flasque 29 de celui-ci, tel que schématisé par une flèche F2 sur les figures 9C et 9D.

Sous les effets de la traction dont elle est alors l'objet, la charnière 23 cède, et, après avoir cheminé le long du flasque 29, la griffe 20 vient s'appliquer, par sa facette de pincement 31, contre la surface interne du panneau de parement 11, tel que représenté sur la figure 9D.

Le panneau de parement 11 se trouve ainsi dûment pincé entre, d'une part, la garde d'appui 49 des divers accessoires de fixation à griffe 14, et, d'autre part, leur griffe 20.

Si désiré, une dépose de la boîte d'encastrement 10 est possible, par une action inverse sur la vis de commande 21 de ces accessoires de fixation à griffe 14.

Bien entendu, la présente invention ne se limite pas à la forme de réalisation décrite et représentée, mais englobe toute variante d'exécution.

En particulier, la charnière articulant initialement la griffe au corps de l'accessoire de fixation à griffe suivant l'invention peut éventuellement être fragmentée en deux ou plusieurs languettes si désiré.

## Revendications

1. Accessoire de fixation pour équiper une boite d'encastrement, lequel accessoire comporte une vis de commande (21) et une griffe (20), qui est en prise à vissage avec la vis de commande (21), et qui, sous le contrôle de celle-ci, est susceptible de passer d'une position rétractée à une position déployée, **caractérisé en ce qu'**il comporte en propre, en outre de la griffe (20) et de la vis de commande, un corps (22), que la vis de commande (21) traverse en deçà de la griffe (20), et auquel cette griffe (20) est articulée par une charnière (23) à distance de la vis de commande (21).

2. Accessoire de fixation à griffe suivant la revendication 1, **caractérisé en ce que**, en position rétractée, la griffe (20) s'étend dans le prolongement du corps (22).

3. Accessoire de fixation à griffe suivant l'une quelconque des revendications 1, 2, **caractérisé en ce que** la charnière (23) s'étend transversalement par rapport à la vis de commande (21).

4. Accessoire de fixation à griffe suivant l'une quelconque des revendications 1 à 3, **caractérisé en ce que** la charnière (23) est évanescente.

5. Accessoire de fixation à griffe suivant la revendication 4, **caractérisé en ce que**, pour coopération avec la vis de commande (21), la griffe (20) comporte deux perçages (32, 33) qui se recoupent l'un l'autre sensiblement à angle droit, à savoir, un perçage de basculement (32), avec lequel la vis de commande (21) est en prise lorsque la griffe (20) est en position rétractée, et un perçage de translation (33), avec lequel la vis de commande (21) est en prise lorsque la griffe (20) est en position déployée.

6. Accessoire de fixation à griffe suivant la revendication 5, **caractérisé en ce que** le perçage de basculement (32) est ouvert latéralement du côté opposé à la charnière (23).

7. Accessoire de fixation à griffe suivant l'une quelconque des revendications 5, 6, **caractérisé en ce que** le perçage de translation (33) comporte, intérieurement, du côté opposé à la charnière (23), un dégagement (35), qui s'étend au moins en partie en regard du perçage de basculement (32).

8. Accessoire de fixation à griffe suivant la revendication 7, **caractérisé en ce que** le fond (36) du dégagement (35) que comporte intérieurement le perçage de translation (33) a un profil circulaire centré sur la charnière (23).

9. Accessoire de fixation à griffe suivant l'une quelconque des revendications 4 à 8, **caractérisé en ce que** la griffe (20) est d'un seul tenant avec le corps (22), et la charnière (23) qui la relie à celui-ci est sécable.

10. Accessoire de fixation à griffe suivant la revendication 9, **caractérisé en ce que** la charnière (23) est formée par une zone de moindre épaisseur intervenant entre la griffe (20) et le corps (22).

11. Accessoire de fixation à griffe suivant l'une quelconque des revendications 1 à 10, **caractérisé en ce que** le corps (22) comporte une douille (24), que la vis de commande (21) traverse, et un flasque (29), qui longe la douille (24), en s'étendant au-delà de celle-ci, et en bout duquel intervient la charnière (23).

12. Accessoire de fixation à griffe suivant la revendication 11, **caractérisé en ce que** le corps (22) comporte, latéralement, deux joues (42), entre lesquelles la griffe (20) est engagée lorsqu'elle est en position déployée.

13. Accessoire de fixation à griffe suivant la revendication 12, **caractérisé en ce que** la griffe (20) comporte, latéralement, deux épaulements (43), pour son appui contre la tranche des deux joues (42) du corps (22) lorsqu'elle est en position déployée.

14. Accessoire de fixation à griffe suivant l'une quelconque des revendications 1 à 13, **caractérisé en ce que** le corps (22) présente, latéralement, deux crans (45) qui s'étendent chacun parallèlement à la vis de commande (21).

15. Accessoire de fixation à griffe suivant les revendications 12 et 14, prises conjointement, **caractérisé en ce que** les crans (45) du corps (22) sont chacun respectivement formés à la faveur de dégagements (46) intervenant en creux à la surface extérieure de ses joues (42).

16. Accessoire de fixation à griffe suivant l'une quelconque des revendications 1 à 15, **caractérisé en ce que** le corps (22) présente, en saillie sur sa surface extérieure, sur une partie au moins du contour de celle-ci, une nervure (48), qui, disposée à distance de l'une et de l'autre de ses extrémités, s'étend transversalement par rapport à la vis de commande (21).

17. Accessoire de fixation à griffe suivant l'une quelconque des revendications 1 à 16, **caractérisé en ce que** le corps (22) présente, à son extrémité supérieure, une garde d'appui (49), qui s'étend transversalement par rapport à la vis de commande (21), du côté de celle-ci où intervient la griffe (20) lorsque cette griffe (20) est en position déployée.

18. Boîte d'encastrement du genre équipée localement d'au moins un accessoire de fixation à griffe (14), **caractérisée en ce que** cet accessoire de fixation à griffe (14) est conforme à l'une quelconque des revendications 1 à 17.

19. Boîte d'encastrement suivant la revendication 18, **caractérisée en ce que**, comportant, en creux, sur sa surface extérieure, au moins un logement (15), qui est globalement tubulaire, et qui, ouvert vers l'extérieur, est apte à recevoir un accessoire de fixation à griffe (14), elle comporte, en saillie sur la paroi intérieure de ce logement (15), parallèlement aux génératrices de celui-ci, deux bourrelets (52).

20. Boîte d'encastrement suivant l'une quelconque des revendications 18, 19, **caractérisée en ce qu'**elle présente plusieurs zones d'angles (17), avec un logement (15) dans chacune de celles-ci.

## Patentansprüche

1. Befestigungselement zur Ausstattung eines Einbaubehälters, welches eine Betätigungsschraube (21) und einen Greifer (20), der mit der Betätigungsschraube (21) in Schraubeingriff ist, aufweist, wobei der Greifer gesteuert von der Betätigungsschraube in der Lage ist, von einer eingefahrenen Position in eine ausgefahrene Position überzugehen,
**dadurch gekennzeichnet,**
**dass** es zusätzlich zu dem Greifer (20) und der Betätigungsschraube (21) einen Körper (22) aufweist, den die Betätigungsschraube (21) unterhalb des Greifers (20) quert, und mit dem dieser Greifer (20) von der Betätigungsschraube (21) beabstandet gelenkig über ein Scharnier (23) verbunden ist.

2. Befestigungselement mit Greifer nach Anspruch 1,
**dadurch gekennzeichnet,**
**dass** der Greifer (20) sich in der eingefahrenen Position in Verlängerung des Körpers (22) erstreckt.

3. Befestigungselement mit Greifer nach Anspruch 1 oder 2,
**dadurch gekennzeichnet,**
**dass** das Scharnier (23) sich quer zu der Betätigungsschraube (21) erstreckt.

4. Befestigungselement mit Greifer nach einem der Ansprüche 1 bis 3,
**dadurch gekennzeichnet,**
**dass** das Scharnier (23) gedämpft ist.

5. Befestigungselement mit Greifer nach Anspruch 4,
**dadurch gekennzeichnet,**
**dass** der Greifer (20) zwei Bohrungen (32, 33) zum Zusammenwirken mit der Betätigungsschraube (21) aufweist, die sich gegenseitig unter einem im Wesentlichen rechten Winkel schneiden, nämlich eine Kippbohrung (32), mit der die Betätigungsschraube (21) in Eingriff ist, wenn der Greifer (20) in der eingefahrenen Position ist, und eine Translationsbohrung (33), mit der die Betätigungsschraube (21) in Eingriff ist, wenn der Greifer (20) in der ausgefahrenen Position ist.

6. Befestigungselement mit Greifer nach Anspruch 5,
**dadurch gekennzeichnet,**
**dass** die Kippbohrung (32) an der dem Scharnier (23) gegenüberliegenden Seite seitlich offen ist.

7. Befestigungselement mit Greifer nach Anspruch 5 oder 6,
**dadurch gekennzeichnet,**
**dass** die Translationsbohrung (33) in ihrem Inneren, an der dem Scharnier (23) gegenüberliegenden Seite, eine Aussparung (35) aufweist, welche sich zumindest teilweise gegenüber der Kippbohrung (32) erstreckt.

8. Befestigungselement mit Greifer nach Anspruch 7,
**dadurch gekennzeichnet,**
**dass** der Boden (36) der Aussparung (35), welche die Translationsbohrung (33) in ihrem Inneren aufweist, einen kreisförmigen Querschnitt besitzt, welcher mittig über dem Scharnier (23) liegt.

9. Befestigungselement mit Greifer nach einem der Ansprüche 4 bis 8,
**dadurch gekennzeichnet,**
**dass** der Greifer (20) einstückig mit dem Körper (22) ausgebildet ist, und dass das Scharnier (23), welches ihn mit selbigem verbindet, teilbar ist.

10. Befestigungselement mit Greifer nach Anspruch 9,
**dadurch gekennzeichnet,**
**dass** das Scharnier (23) von einem Bereich verringerter Dicke gebildet ist, welcher zwischen dem Greifer (20) und dem Körper (22) ausgebildet ist.

11. Befestigungselement mit Greifer nach einem der Ansprüche 1 bis 10,
**dadurch gekennzeichnet,**
**dass** der Körper (22) eine Hülse (24), welche die Betätigungsschraube (21) quert, und eine Blende (29) aufweist, wobei die Blende (29) sich entlang der Hülse (24) und über diese hinaus erstreckt, und an ihrem Ende das Scharnier (23) liegt.

12. Befestigungselement mit Greifer nach Anspruch 11,
**dadurch gekennzeichnet,**
**dass** der Körper (22) seitlich zwei Seitenstücke (42) aufweist, zwischen denen der Greifer (20) gehalten ist, wenn er in der ausgefahrenen Position ist.

13. Befestigungselement mit Greifer nach Anspruch 12,
**dadurch gekennzeichnet,**
**dass** der Greifer (20) seitlich zwei Schulterbereiche (43) aufweist, welche ihm in der ausgefahrenen Position zum Abstützen gegen die Schnittfläche der zwei Seitenstücke (42) des Körpers (22) dienen.

14. Befestigungselement mit Greifer nach einem der Ansprüche 1 bis 13,
**dadurch gekennzeichnet,**
**dass** der Körper (22) seitlich zwei Rastkerben (45) aufweist, welche sich jeweils parallel zu der Betätigungsschraube (21) erstrecken.

15. Befestigungselement mit Greifer nach den Ansprüchen 12 und 14 zusammengenommen,
**dadurch gekennzeichnet,**
**dass** die Rastkerben (45) des Körpers jeweils mit Hilfe von Aussparungen (46) gebildet sind, welche als Ausnehmung auf der äußeren Oberfläche seiner Backen (42) ausgebildet sind.

16. Befestigungselement mit Greifer nach einem der Ansprüche 1 bis 15,
**dadurch gekennzeichnet,**
**dass** der Körper (22) auf seiner äußeren Oberfläche vorspringend, zumindest auf einem Teil der Kontur derselben, eine Rippe (48) aufweist, welche mit Abstand von dem einen und dem anderen Ende des Körpers angebracht ist und sich quer zu der Betätigungsschraube (21) erstreckt.

17. Befestigungselement mit Greifer nach einem der Ansprüche 1 bis 16,
**dadurch gekennzeichnet,**
**dass** der Körper (22) an seinem oberen Ende einen Halteschutz (49) aufweist, der sich quer zu der Betätigungsschraube (21) erstreckt, und zwar auf der Seite derselben, auf der der Greifer (20) liegt, wenn dieser Greifer (20) in der ausgefahrenen Position ist.

18. Einbaubehälter, der lokal mit mindestens einem Befestigungselement mit Greifer (14) ausgestattet ist,
**dadurch gekennzeichnet,**
**dass** dieses Befestigungselement mit Greifer (14) nach einem der Ansprüche 1 bis 17 ausgebildet ist.

19. Einbaubehälter nach Anspruch 18,
**dadurch gekennzeichnet,**
**dass** er als Ausnehmung auf seiner äußeren Oberfläche zumindest eine Kammer (15) aufweist, welche im Wesentlichen röhrenförmig ist und welche nach außen offen und imstande ist, ein Befestigungselement mit Greifer (14) aufzunehmen, und dass er vorspringend auf der Innenwand dieser Kammer (15) zwei Wülste (52) aufweist, welche parallel zu deren Rändern sind.

20. Einbaubehälter nach Anspruch 18 oder 19,
**dadurch gekennzeichnet,**
**dass** er mehrere Eckbereiche (17) mit einer Kammer (15) in jedem dieser Eckbereiche aufweist.

## Claims

1. A fixing accessory for a flush-mounting wall box, said accessory comprising a feed screw (21) and a lug (20) which is engaged with the feed screw (21) by screwing and which can pass from a retracted position to a deployed position under the control thereof, **characterized in that**, in addition to the lug (20) and the feed screw, it comprises an integral body (22) which is traversed by the feed screw (21) proximal to the lug (20), and to which said lug (20) is articulated via a hinge (23) spaced from the feed screw (21).

2. A fixing accessory with lugs according to claim 1, **characterized in that** in the retracted position, the lug (20) extends in the longitudinal direction of the body (22).

3. A fixing accessory with lugs according to either claim 1 or claim 2, **characterized in that** the hinge (23) extends transversely with respect to the feed screw (21).

4. A fixing accessory with lugs according to any one of claims 1 to 3, **characterized in that** the hinge (23) is a short-term hinge.

5. A fixing accessory with lugs according to claim 4, **characterized in that**, in order to cooperate with the feed screw (21), the lug (20) comprises two bores (32, 33) which cross-cut each other substantially at right angles, namely a deflection bore (32), with which the feed screw (21) is engaged when the lug (20) is in the retracted position, and a translation bore (33), with which the feed screw (21) is engaged when the lug (20) is in the deployed position.

6. A fixing accessory with lugs according to claim 5, **characterized in that** the deflection bore (32) is open laterally on the side opposite to the hinge (23).

7. A fixing accessory with lugs according either claim 5 or claim 6, **characterized in that** the translation bore (33) internally comprises a backoff (35), on the side opposite to the hinge (23), at least part of which extends facing the deflection bore (32).

8. A fixing accessory with lugs according to claim 7, **characterized in that** the bottom (36) of the backoff (35) which internally comprises the translation bore (33) has a circular profile centred on the hinge (23).

9. A fixing accessory with lugs according to any one of claims 4 to 8, **characterized in that** the lug (20) is in a single piece with the body (22), and the hinge (23) which connects it thereto is frangible.

10. A fixing accessory with lugs according to claim 9, **characterized in that** the hinge (23) is formed by a zone of reduced thickness intervening between the lug (20) and the body (22).

11. A fixing accessory with lugs according to any one of claims 1 to 10, **characterized in that** the body (22) comprises a bush (24) which is traversed by the feed screw (21) and a flange (29) which lengthens the bush (24) by extending beyond it, the hinge (23) being placed at the end thereof.

12. A fixing accessory with lugs according to claim 11, **characterized in that** the body (22) laterally comprises two cheeks (42) between which the lug (20) is engaged when it is in the deployed position.

13. A fixing accessory with lugs according to claim 12, **characterized in that** the lug (20) laterally comprises two shoulders (43) which can bear against the edge of the two cheeks (42) of the body (22) when in the deployed position.

14. A fixing accessory with lugs according to any one of claims 1 to 13, **characterized in that** the body (22) laterally has two notches (45) each of which extends parallel to the feed screw (21).

15. A fixing accessory with lugs according to claim 12 or claim 14, taken together, **characterized in that** the notches (45) of the body (22) are each respectively formed by means of cutouts (46) which are recessed into the outer surface of its cheeks (42).

16. A fixing accessory with lugs according to any one of claims 1 to 15, **characterized in that** the body (22) exhibits a rib (48) projecting from its outer surface over at least a portion of the contour thereof which is located at a distance from each of the ends of the body and which extends transversely with respect to the feed screw (21).

17. A fixing accessory with lugs according to any one of claims 1 to 16, **characterized in that** the upper end of the body (22) exhibits a support retainer (49) which extends transversely with respect to the feed screw (21), to the side thereof on which the lug (20) is located when said lug (20) is in the deployed position.

18. A wall box of the type that is locally provided with at least one fixing accessory with lugs (14), **characterized in that** said fixing accessory with lugs (14) is in accordance with any one of claims 1 to 17.

19. A wall box according to claim 18, **characterized in that** it comprises, recessed into its outer surface, at least one housing (15) which is generally tubular and which is open towards the exterior thereof, and which is capable of receiving a fixing accessory with lugs (14), and comprising two beads (52) projecting from the inner wall of said housing (15) parallel to the generatrices thereof.

20. A wall box according to either claim 18 or claim 19, **characterized in that** it exhibits a plurality of comer zones (17) with a housing (17) in each thereof.
